(19) **Europäisches Patentamt / European Patent Office / Office européen des brevets**

(11) **EP 2 544 500 B1**

(12) # EUROPEAN PATENT SPECIFICATION

(45) Date of publication and mention
of the grant of the patent:
**30.08.2017 Bulletin 2017/35**

(51) Int Cl.:
**H04W 72/08** *(2009.01)* H04W 72/04 *(2009.01)*

(21) Application number: **11305863.0**

(22) Date of filing: **05.07.2011**

(54) **Concept for inter-cell interference coordination in a cellular communication network**

Konzept zur Interferenzkoordination zwischen Zellen in einem zellularen Kommunikationsnetzwerk

Concept pour la coordination d'interférence entre cellules dans un réseau de communication cellulaire

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.01.2013 Bulletin 2013/02**

(73) Proprietor: **ALCATEL LUCENT
92100 Boulogne-Billancourt (FR)**

(72) Inventor: **Klein, Siegfried
70469 Stuttgart (DE)**

(74) Representative: **Menzietti, Domenico et al
Alcatel Lucent
Intellectual Property & Standards
70430 Stuttgart (DE)**

(56) References cited:
**US-A1- 2008 233 967     US-A1- 2010 081 388
US-A1- 2010 267 408**

- **NOKIA SIEMENS NETWORKS ET AL: "Update of Inter-cell Interference Coordination Feature Description", 3GPP DRAFT; R2-111639, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Taipei, Taiwan; 20110221, 25 February 2011 (2011-02-25), XP050494060, [retrieved on 2011-02-25]**
- **ERICSSON: "Uplink inter-cell interference coordination", 3GPP DRAFT; R1-080360, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sevilla, Spain; 20080109, 9 January 2008 (2008-01-09), XP050108879, [retrieved on 2008-01-09]**
- **ALCATEL-LUCENT ET AL: "Support for Semi-Static Inter cell Interference Coordination", 3GPP DRAFT; R1-081874_SEMI-STATIC_INTER_COORD_OR_ FREUS E_2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Kansas City, USA; 20080514, 14 May 2008 (2008-05-14), XP050110242, [retrieved on 2008-05-14]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Embodiments of the present invention generally relate to wireless communications and, more specifically, to a concept for Inter-Cell Interference Coordination (ICIC) in a cellular communication network.

Background

Wireless or cellular communication networks are steadily growing with an increasing number of systems for mobile communication being deployed. Due to the ever increasing demand for wireless communications, frequency spectrum for deploying new systems is increasingly scarce and, hence, an expensive resource.

In order to provide continuous service coverage, areas of adjacent cells or base station transceivers in a cellular communication system typically overlap, i.e. there is a geographically overlapping area at a border or edge between two adjacent cells or base station transceivers of a cellular communication system, wherein signals from either cells or base station transceivers may be received by a mobile terminal located close to that overlapping cell-edge area. While a mobile terminal may only be assigned to one cell, i.e. a serving cell or a serving base station, it may receive its desired signal from only its serving base station and experience other signals as interference. Interference between different or neighboring cells, which is commonly referred to as inter-cell interference, in cellular communication networks has always been an issue since mobile communication networks have been introduced.

The impact of said inter-cell interference is more obvious for cell-edge users, i.e., for users or mobile terminals which are located in a border area of their serving cell. Such cell-edge users are more sensitive due to already relatively bad wireless channel conditions with their respective serving base stations. This may result in a poor reception at a cell edge or border in the downlink direction, i.e. the direction from the serving base station to an associated mobile terminal. Limited reception at the cell edge is an important issue for wireless network operators who want to provide full coverage inside their service area and at the same time guarantee a certain Quality of Service (QoS) to their subscribers independently of their location inside a cell.

In order to mitigate such inter-cell interference, various inter-cell interference mitigation techniques may principally be employed. In general, there are three basic approaches: Inter-Cell Interference Randomization, Inter-Cell Interference Cancellation, and Inter-Cell Interference Coordination, which will also be abbreviated as ICIC in the sequel. Inter-Cell Interference Randomization aims at randomizing an interfering signal and thus allowing interference suppression at a mobile terminal either by applying (pseudo) random scrambling after channel coding/interleaving, such as commonly used in Code Division Multiple Access (CDMA) systems, such as e.g. the Universal Mobile Telecommunications System (UMTS), or using different kinds of frequency hopping, as e.g. also applied in the Global System for Mobile Communications (GSM). Inter-Cell Interference Cancellation is based on interference suppression which may e.g. be achieved by spatial suppression using multiple antennas at the mobile terminal. Instead, ICIC generally aims at applying restrictions to downlink resource management in a coordinated way between neighboring or adjacent cells. ICIC-techniques for multi-cell wireless systems such as e.g. GSM, Enhanced General Packet Radio Service (EGPRS), Enhanced Data Rates for GSM Evolution (EDGE), and UMTS have been investigated ever since these systems started to gain popularity.

Recently, the 3rd Generation Partnership Project (3GPP) has specified the so-called Long Term Evolution (LTE) of 3rd generation cellular systems, making LTE a so-called beyond 3G or 4G wireless communication system. Unlike the previous generations, LTE uses Orthogonal Frequency Division Multiplexing (OFDM) and Orthogonal Frequency Division Multiple Access (OFDMA) for modulation and as multiple access scheme, respectively. The orthogonal characteristic among adjacent frequency sub-carriers is an important feature of the OFDM technology, since it may combat intra-cell interference between different users inside a cell. However, in a multi-cell environment inter-cell interference exists and plays an important role for overall performance of the network. More specifically, inter-cell interference in OFDM-based systems, such as LTE, arises when the same frequency resources are used in neighbor cells. Such a scenario is also commonly referred to as a frequency reuse of one. For example, when two users in different cells use the same frequency block simultaneously, then the Signal-to-Interference-plus-Noise Ratio (SINR) associated with these frequency blocks can drop to a rather low value, resulting in a bad resource utilization and lower performance. Accordingly, ICIC mechanisms target to reduce the collision probabilities and to mitigate the SINR degradation that such radio resource collisions of neighboring cells may cause. For instance, neighboring cells may have some cell specific preferences for different subsets of radio resource blocks, or neighboring cells may employ reduced power for colliding radio resource blocks. Such restrictions in a cell will provide the possibility for improvement in SINR, and consequently to the cell-edge throughput and coverage.

ICIC also requires communication between different network nodes in order to set and reconfigure these radio resource restrictions. Two cases are considered so far, the static one where reconfiguration of the resource restrictions is done on a time scale corresponding to days and the semi-static where the time scale is much smaller and corresponds to seconds. Semi static ICIC is described, for example, in ALCATEL-LUCENT ET AL: "Support for Semi-Static Inter cell Interference Coordination",3GPP DRAFT; R1-08-1874 SEMI STATIC INTER COORD OR FREUSE 2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE, vol. RAN WG1, no. Kansas City, USA; 20080514, 14 May 2008. Currently, static ICIC methods are often applied to improve the interference situation for cell-edge mobile terminals. These static methods aim at reducing the individual transmission resources of a radio cell based on a coloring scheme of the radio cell controllers in the network independent of a current network load.

Descriptions of current ICIC features may, for example, be found in 3GPP TS 36.300 or NOKIA SIEMENS NETWORKS ET AL: "Update of Inter-cell Interference Coordination Feature Description",3GPP DRAFT; R2-111639, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Taipei, Taiwan; 20110221, 25 February 2011.

ERICSSON: "Uplink inter-cell interference coordination",3GPP DRAFT; R1-080360, 3RD GENERATION PARTNERSHIPPROJECT (3GPP), MOBILE COMPETENCE CENTRE ;650, ROUTE DES LUCIOLES ; F-06921 SOPHIA-ANTIPOLIS CEDEX ; FRANCE,vol. RAN WG1, no. Sevilla, Spain; 20080109, 9 January 2008 proposes a high interference indicator containing the center frequency of the high interference band where the scheduler should put the users creating high interference to neighbor cells. A cell may send different high interference indicator to different neighbors something which may be useful for large cells where the path-loss differences can be considerable between different neighbors. This high interference indicator will in conjunction with pathloss Information provided by RSRP measurements from the users in the own cell allow to implement proactive inter-cell interference coordination in a reuse one system.

US 2008/033967 A1 discloses a concept for inter-cell interference management in a wireless communication system. A base station performs interference management by conveying and receiving load indicator messages over a backhaul communication link to disparate neighboring base stations that serve interfering mobile stations. Reporting of load indicators takes place according to a reporting policy that is event-based, and accounts for variations of interference metrics over available time-frequency resources. Communication with neighboring base stations is limited to a monitoring interference set, which can be determined statically, according to deployment characteristics of a wireless network, or the set can be adjusted dynamically according to a set of received UL signals or a set of DL CQI measurement reports. Reporting policy and interference set can be autonomously adapted to optimize backhaul traffic as well as interference control.

US 2010/0267408 A1 proposes an inter-cell interference coordination concept for mitigating inter-cell interference in a wireless communication system by using interference coordination information exchanged among neighbor base stations. The method includes receiving, at a serving base station, power control messages transmitted by neighbor base stations, receiving incoming interference coordination messages transmitted by neighbor base stations, each message including interference indicators of resource blocks, allocating the resource blocks with transmission power per resource block to user equipment served by the base station based on the power control and interference coordination messages, generating outgoing interference coordination messages for the respective neighbor base stations based on the resource block allocation result, and transmitting the interference coordination messages to the neighbor base stations, respectively.

It is desirable, however, to provide an ICIC concept which may adapt radio resource restrictions in the radio cell controllers taking into account a network load observed in the radio access network.

Summary

Embodiments of the present invention may be based on the finding that a semi-static inter-cell interference coordination (ICIC) concept may adapt radio resource restrictions in response to a network load observed in the wireless radio access network. In particular in highly loaded radio access networks semi-static ICIC may provide gains by reducing interference in the vicinity of a radio cell.

Embodiments provide an ICIC concept wherein each serving base station transceiver may identify its interfering neighbor base stations and may determine information about each. Then, a potential gain for a cell's serving base station may be estimated under the assumption that an identified interfering neighbor base station restrains from the use of a physical radio resource. Each serving base station may then transfer load information and the estimated potential gain to each of its interfering neighbor base station transceivers. Each interfering base station may evaluate the provided information under consideration of its own current load situation and may then optionally reduce the usage of certain physical radio resources to improve overall system performance.

Hence, embodiments provide a method for inter-cell interference coordination in a cellular communication network comprising a plurality of radio cells, each radio cell being served by a serving base station. The method comprises the following steps:

a) determining a current load situation of a serving base station,

b) identifying interfering base stations interfering a communication of the serving base station with its associated mobile terminals located in a border or edge area of the serving base station's served radio cell,

c) estimating a hypothetical capacity gain for the serving base station under the premise that an identified interfering base station restrains a usage of at least a subset of its interfering physical radio resources,

d) transferring a report on the serving base station's current load situation and the estimated hypothetical capacity gain to each of the identified interfering base stations, and

e) evaluating, at an identified interfering base station, at least one report transferred from at least one neighboring serving base station, in order to optionally reduce a usage of said identified interfering base station's physical radio resources based on the evaluation and a current load situation of the identified interfering base station.

In some embodiments the method or the steps thereof may be executed either continuously, wherein in other embodiments the method may only be executed during an overload situation of the cellular communication network. That is to say the algorithm or method may be active all the time in some embodiments. In order to reduce usage of processing resources, the algorithm may, however, as well be deactivated if there is no physical radio resource shortage because of a comparatively low load in the cellular communication or radio access network. For this purpose the relative physical radio resource usage of a base station may be compared against a predefined load-threshold in various embodiments. As an additional or alternative criterion the method may be deactivated if the mobile terminals associated to the serving base station are mainly located close to the serving cell's center, i.e. close to the serving base station, because such mobile terminals knowingly only benefit little from ICIC. For this purpose long term statistics of Channel Quality Indicator (CQI) reports may e.g. be compared against their short term statistics. This can be either a distribution or a percentile. The CQI is a measurement of a communication quality of wireless channels. CQI may be a value (or values) representing a measure of channel quality for a given channel. Typically, a high value CQI is indicative of a channel with high quality and vice versa. A CQI for a channel may be computed by making use of performance metric, such as a Signal-to-Noise Ratio (SNR) or a Signal-to-Interference plus Noise Ratio (SINR) of the channel. These values may be measured for a given channel and then used to compute a CQI for the channel.

According to embodiments, the steps a) to d) of the aforementioned method may be executed by an apparatus for a serving base station. In other words, a serving base station apparatus according to embodiments of the present invention is adapted to perform a serving base station method for ICIC in a cellular communication network, wherein the serving base station method comprises determining a current load situation of the serving base station, identifying interfering base stations interfering a communication of the serving base station with its associated mobile terminals located in a border or edge area of the serving base station's served radio cell, estimating a hypothetical capacity gain for the serving base station under the premise that an identified interfering base station restrains a usage of at least a subset of its interfering physical radio resources, and transferring a report on the determined cell load and the estimated potential gain to each of the identified interfering base stations.

Consequently, according to other embodiments, step e) of the aforementioned method may be executed by an apparatus for an interfering base station. In other words, an interfering base station apparatus according to embodiments of the present invention is adapted to perform an interfering base station method for ICIC in a cellular communication network, wherein the interfering base station method comprises evaluating, based on a current load situation of the interfering base station, at least one report transferred to the interfering base station from at least one neighboring serving base station, the at least one report being indicative of a cell load and an estimated hypothetical capacity gain for the serving base station under the premise that the interfering base station restrains a usage of at least a subset of its interfering physical radio resources, in order to optionally reduce the usage of the interfering base station's physical radio resources based on the evaluation.

According to embodiments, determining the serving base station's current load situation may comprise determining physical radio resource blocks used for dedicated communication of useful data from the serving base station to its associated mobile terminals and/or vice versa. Thereby physical radio resource blocks may be understood as frequency portions, such as e.g. subcarriers of an OFDMA based system, time portions, such as e.g. time slots or frames, or a combination thereof. For example, in OFDMA, users are allocated a specific number of subcarriers for a predetermined amount of time. These are referred to as physical resource blocks (PRBs) in the LTE specifications. PRBs thus may have both a time and frequency dimension. Allocation of PRBs may be handled by a scheduling function at a base station (eNodeB). In LTE, for example, a PRB is defined as consisting of twelve consecutive subcarriers for one slot (0.5 msec) in duration. A PRB may be the smallest element of resource allocation assigned by a base station scheduler. Here and in the remainder a load generated by users in a cell may be understood as the physical radio resources used to serve these users in relation to totally available physical radio resources. For example, the number of frequency carriers or time slots used to serve the users in relation to the total number of frequency carriers or time slots available.

According to embodiments, measurement reports of mobile terminals may be evaluated by the serving base station to identify potentially interfering neighbor cells served by neighbor base stations. In some embodiments HandOver (HO) measurements, which may be carried out by a mobile terminal on a regular basis, may be used. In this case the mobile terminals are sending their measurements to the serving base station just before HO.

The serving base station will evaluate this information and, based thereon, will generate reports to the interfering base stations.

Handover is a key functionality of most cellular communication systems which tries to keep a mobile terminal connected possibly to the best base station in its vicinity. Handover is usually based on downlink received signal strength (RSS) and Carrier-to-Interference Ratio (CIR) measurements of the mobile terminal. Processing of a HO measurements is usually done in Layer 1 (L1) and Layer 3 (L3) by the mobile terminal. The HO is then initiated by the serving base station if certain event criteria are met. In LTE, for example, a mobile terminal performs downlink radio channel measurements based on reference or pilot symbols. In particular, the mobile terminal can measure the Reference Symbols Received Power (RSRP) and the Reference Symbols Received Quality (RSRQ). If certain network configured conditions are satisfied, the mobile terminal sends the corresponding measurement report indicating the triggered event. The RSRP and RSRQ may be measured based on the reference symbols received from the serving cell and from the strongest adjacent (interfering) cells. In case the handover algorithm is based on RSRP values, handover may be triggered when an RSRP value from an adjacent cell is higher than the one from the serving cell by a number of dBs equal to HO hysteresis; this condition has to be satisfied for a time period which commonly referred to as Time-To-Trigger (TTT). However, HO measurements or HO measurements reports provide a slightly delayed view of the inter-cell interference situation, since they are only triggered when a neighbor cell becomes a predefined amount of offset better than the serving cell (A3 event).

Therefore, in other embodiments additional or alternative mobile terminal measurements may be configured such that they are dedicated to the measurement of a more current inter-cell interference situation, thereby providing a more current view of the inter-cell interference situation. For example, a so-called A2 event, i.e. when serving becomes worse than a predefined threshold, may be instantaneously reported from an associated mobile terminal to its serving base station. Such additional or alternative measurement reports may be configured to identify mobile terminals at the cell border. In this case the mobile terminals are sending their measurements to the serving base station if they enter the cell border. For example, if a 3dB cell border window is assumed, then there will be a higher number of reports, because mobiles may enter and leave the cell border without handing over to another cell. Hence, such additional measurement reports would cause additional traffic in the air interface.

To summarize, no matter whether measurement reports are sent to the serving base station in response to an A2 and/or A3 event, in any case identifying the interfering base stations may comprise measurements of an associated mobile terminal located in the border area of the radio cell, the measurements being directed towards signal strength (RSRP) and/or signal quality (RSRQ) of base stations being in vicinity of the associated mobile terminal.

Instead of receiving more or less periodic measurement reports from an associated mobile terminal, identifying the interfering base stations may also comprise specifically instructing an associated mobile terminal located in the border or edge area of the radio cell to perform measurements related to base stations being in vicinity of the associated mobile terminal, i.e. its serving base station and potentially interfering base stations. Whether a mobile terminal is located in the border area may e.g. be determined based on CQI values reported from the mobile terminals in uplink direction.

An interfering base station $i$ ($i = 1, 2, ..., N_i$) may be identified as any base station being visible in any of a served mobile terminal's measurement reports. For each interfering base station $i$ a report may be generated at the serving base station $s$ ($s = 1, 2, ..., N_s$), the serving base station's report holding cumulated hypothetical capacity gains for all its associated mobiles under the condition that the interfering base station i being currently considered is not transmitting. This report may then be conveyed from the serving base station $s$ to the interfering base station i via an inter-base station interface. In LTE, for example, the X2 inter-base station interface may be used for that purpose. Of course, other interfaces between neighboring base stations are also conceivable, like, e.g. the air interface. According to embodiments, estimating the hypothetical capacity gain hence comprises determining the cumulated hypothetical capacity gain $G_{s,i}$ related to a plurality of mobile terminals located in the border area of the radio cell and being associated to the serving base station $s$ under the assumption that an interfering base station i is not transmitting on certain physical downlink radio resources. Thereby the cumulated capacity gain $G_{s,i}$ may be determined based on

$$G_{s,i} = \sum_m G_{m,s,i} \, , \tag{1}$$

wherein

$$G_{m,s,i} = f_C(Q_{m,s,i}) - f_C(Q_{m,s}) . \tag{2}$$

In equation (2) $f_C(Q_{m,s,i})$ denotes an estimate of a channel capacity $C_{m,s,i}$ based on a channel quality

$$Q_{m,s,i} = \frac{S_{m,s}}{T_m - S_{m,s} - I_{m,i}} \qquad (3)$$

of an associated mobile terminal m served by serving base station *s* under the assumption that the interfering base station *i* is not transmitting. $f_C(Q)$ denotes an estimate of a channel capacity C based on a measured channel quality $Q_m$ of the associated mobile terminal m served by serving base station *s* with experienced interference, wherein the measured channel quality $Q_{m,s}$ corresponds to a given cell's *s* measured RSRQ, which may be regarded as a ratio between an average power of all resource elements which carry cell-specific reference signals over an entire communications bandwidth (RSRP) and a Received Signal Strength Indicator (RSSI), i.e. RSRQ = RSRP/RSSI. Hence, $f_C(.)$ denotes an estimation of a corresponding channel capacity through a mapping function $f_C(.)$. This is part of the link adaptation or the so-called adaptive coding and modulation (ACM), which is a term used to denote the matching of the modulation, coding and other signal and protocol parameters to the conditions on the radio link (e.g. the path-loss, the interference due to signals coming from other transmitters, the sensitivity of the receiver, the available transmitter power margin, etc.).

In the above equation (3) $I_{m,i}$ represents the RSRP of the interfering base station *i*, $S_{m,s}$ corresponds to the average power of all physical resource elements which carry cell-specific reference signals over an entire communications bandwidth (RSRP), and $T_m$ corresponds to an estimate for a total received power of mobile *m*, which may be determined based on

$$T_m = \frac{S_{m,s}(1 + Q_{m,s})}{Q_{m,s}} \qquad (4)$$

for given measurements $S_{m,s}$ (RSRP) and $Q_{m,s}$ (RSRQ) in cell *s*. The estimate *T* may be improved by taking a mobile terminal's *S* and *Q* measurements of more than one cell into account. For example, the mobile terminal may measure *S* and *Q* of a plurality of neighboring cells and report them to its serving cell as well. There, an improved estimate for $T_m$ may then be computed.

During step d), i.e. transferring the report, the cumulated capacity gain $G_{s,i}$ of the serving base station *s*, under the assumption that interfering base station i is not transmitting, may be transferred from said serving base station *s* to said interfering base station *i*, e.g. using the X2 inter-base station interface or the air interface. In addition, also information on a current load situation of the serving base station *s* may be provided to the interfering base station i via the X2 interface or the air interface.

Each interfering base station i will receive reports from a plurality of adjacent serving base stations. Based on the received reports, each interfering base station i may calculate a hypothetical combined capacity gain of all neighboring serving base stations *s* under the assumption that the interfering base station i is not transmitting any data to its mobiles using specific physical radio resources. Based on this information (load, hypothetical gain), and with the help of a target function, the interfering base station i may decide on the amount of physical radio resources employed to serve mobiles attached to it. In other words, during step e) of evaluating at least one transferred report at an interfering base station *i*, the hypothetical combined cumulated capacity gain

$$G_i = \sum_s G_{s,i} \qquad (5)$$

of a plurality of reporting serving base stations *s* may be determined under the assumption that said interfering base station i is not transmitting any data using physical radio resources to its associated mobile terminals.

After the evaluation step e), the interfering base station i may decide, based on the at least one received report on a serving base station's determined cell load and its estimated hypothetical gain $G_{s,i}$, on an amount of physical radio resources which the interfering base station may use for communicating with its associated mobile terminals. Load information per serving base station is available at the interfering base station i for guaranteed and best effort traffic separately.

There are several ways to identify the radio resources not to use, e.g. pre-shared knowledge from cell coloring, or explicit coordination between neighbors (e.g. through signaling). According to one embodiment, the highest priority of the interfering base station i may be to serve its own associated mobile terminals with at least a predefined guaranteed rate. A second highest priority may be to enable another (serving) base station to serve its associated mobile terminals at a respective guaranteed rate. Hence, according to an embodiment the interfering base station may decide on the amount of physical radio resources given that communicating with its associated mobile terminals with at least a guaranteed data rate has a highest priority, and given that a communication of a serving base station with its associated mobile terminals with at least a guaranteed data rate has the second highest priority. According to another embodiment, the interfering base station i may also decide to drop one of its associated users in order to best serve the overall network performance. In this case the communication of a neighboring serving base station with its associated mobile terminals with at least a guaranteed data rate has the highest priority.

If this ICIC concept is executed on a higher iteration frequency, it may also be extended to identify mobile terminals for coordinated scheduling and multipoint transmission in downlink.

Some embodiments comprise digital control circuits installed within the serving base station's and/or interfering base station's apparatus' electrical circuitry. Such a digital control circuit, e.g. a digital signal processor (DSP), needs to be programmed accordingly. Hence, yet further embodiments also provide a computer program having a program code for performing at least a step of embodiments of the aforementioned methods, when the computer program is executed on a computer or a digital processor.

Embodiments of the present invention may allow mobile network operators (MNOs) to further optimize a performance of a wireless communication network with respect to inter-cell interference and, hence, throughput. Further, embodiments of the present invention may support load balancing in highly loaded radio access networks, as will be described in more detail below. Load Balancing may support a cellular radio network to adapt to varying traffic load densities and thereby may increase the network throughput. When the load of a particular cell is too high, then load balancing can transfer traffic towards another lower loaded cell and/or support that highly loaded cell, e.g. via reducing its received inter-cell interference. In this way, the system may adapt in a flexible way to the current cell load situations, with the result that the users experience a higher quality of service, and that the total system throughput - at a constant quality level - can be increased. This may lead to a more relaxed cellular network planning and/or to a delayed need to install additional cells in growing networks which directly results in reduced capital expenditures for the network operator.

Brief description of the Figures

Some embodiments of apparatuses and/or methods will be described in the following by way of example only, and with reference to the accompanying figures, in which

Fig. 1 shows a schematic flow chart of a method for inter-cell interference coordination in a cellular communication network, according to an embodiment;

Fig. 2 shows a schematic block diagram of a serving base station apparatus according to an embodiment;

Fig. 3 shows a schematic block diagram of an interfering base station apparatus according to an embodiment;

Fig. 4a shows a frequency coloring scheme for a simulation scenario with intercell interference coordination;

Fig. 4b shows a simulation playground;

Fig. 5a shows carried traffic within seven cells for different load balancing mechanisms with medium traffic load in the other cells;

Fig. 5b shows carried traffic within seven cells for different load balancing mechanisms with high traffic load in the other cells;

Fig. 5c shows carried traffic within seven cells for different load balancing mechanisms with very high traffic load in the other cells, the other cells are already overloaded;

Fig. 6a shows a gain of the ICIC, HO mechanisms for a cell edge to cell center traffic distribution with 15% cell edge traffic, which corresponds to an about uniform traffic distribution within the cell area;

Fig. 6b shows a gain of the ICIC, HO mechanisms for a cell edge to cell center traffic distribution with 30% cell edge traffic; and

Fig. 6c    shows a gain of the ICIC, HO mechanisms for a cell edge to cell center traffic distribution with 50% cell edge traffic;

Description of Embodiments

Various example embodiments will now be described more fully with reference to the accompanying drawings in which some example embodiments are illustrated. In the drawings, the thicknesses of layers and/or regions may be exaggerated for clarity.

Accordingly, while example embodiments are capable of various modifications and alternative forms, embodiments thereof are shown by way of example in the drawings and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (*e.g.*, "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

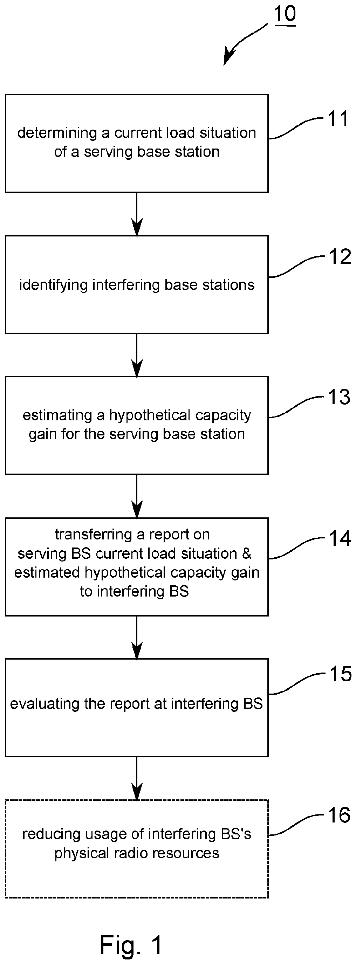

Fig. 1 schematically shows a flow chart of a method 10 for inter-cell interference coordination in a cellular communication network, according to an embodiment.

The method comprises a step 11 of determining a current load situation of a serving base station $s$, a step 12 of identifying interfering base stations i interfering a communication of the serving base station $s$ with its associated mobile terminals located in a border or edge area of the serving base station's served radio cell. The step 12 of identifying is followed by a step 13 of estimating a hypothetical capacity gain $G_{s,i}$ for the serving base station $s$ under the premise that an identified interfering base station i does not use its interfering physical radio resources. In a subsequent step 14 a report on the serving base station's current load situation and the estimated hypothetical capacity gain is transferred from the serving base station $s$ to each of the identified interfering base stations i. At an identified interfering base station i at least one report transferred from at least one neighboring serving base station is evaluated in a step 15, in order to possibly reduce (step 16) a usage of said identified interfering base station's physical radio resources based on the evaluation and an own current load situation of the identified interfering base station.

As has been explained before, the method 10 or individual steps thereof may be executed continuously and independently from a current network load. In other embodiments the method 10 or individual steps thereof may only be executed during an overload situation of the cellular communication network. For this purpose a relative physical radio resource usage of the serving base station may be compared against a predefined load-threshold in such embodiments. According to further embodiments, the method 10 or individual steps thereof may be deactivated if mobile terminals associated to the serving base station are mainly located close to said serving base station. For a related decision on whether a mobile terminal is located in the serving cell's edge area or close to its center, CQI values reported from a mobile terminal to its serving base station in uplink direction may be taken into account, for example.

According to embodiments, the steps 11 to 14 of the ICIC method 10 may be executed by a serving base station or an apparatus thereof, while the steps 15 and 16 may be executed by an interfering base station or an apparatus thereof. As it will be obvious to the skilled person, a first serving base station may be an interfering base station for a second (neighboring or adjacent) serving base station, and vice versa.

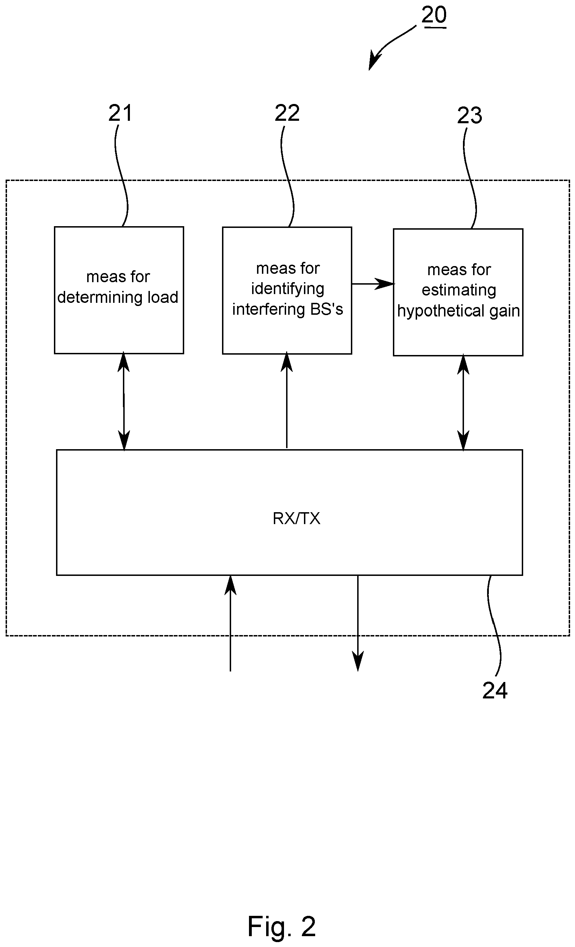

Fig. 2 schematically shows a block diagram of a serving base station apparatus 20, according to an embodiment. Thereby, a serving base station apparatus may be understood as a serving base station itself or an apparatus for usage in or in conjunction with a serving base station.

The serving base station apparatus 20 comprises means 21 for determining a current load situation of the serving base station $s$. Further, the serving base station apparatus 20 comprises means 22 for identifying neighboring interfering base stations $i$, interfering a communication of the serving base station $s$ with its associated mobile terminals located in an edge area of the serving base station's served radio cell. The means 22 for identifying neighboring interfering base stations may be coupled to means 23 for estimating the hypothetical capacity gain $G_{S,i}$ for the serving base station $s$ given that an identified interfering base station i restrains the usage of at least a subset of its interfering physical radio resources. The means 23 for estimating and the means 21 for determining are coupled to a means 24 for transferring a report on the determined serving base station's current load situation and the estimated hypothetical capacity gain $G_{S,i}$ to each of the identified interfering base stations stations $i$. While the means 21, 22, and 23 may comprise individual or common electrical signal processing circuitry, the means 24 for transferring may comprise or may be comprised by an analog and/or digital radio transceiver, for example. Hence, the serving base station apparatus 20 is adapted or configured to perform a serving base station method for ICIC in a cellular communication network, wherein the serving base station method comprises the steps 11 to 14 of method 10.

According to embodiments, the means 21 for determining the serving base station's current load situation may be adapted to determine physical radio resource blocks being actually used for dedicated communication of the serving base station with its associated mobile terminals. A number of these used or occupied physical radio resource blocks may then then be compared against a total number of physical radio resource blocks available for dedicated communication with associated mobile terminals in order to determine a value indicative of a current load situation of the serving base station. For example, a load of 100% is achieved when a serving base station transmits using all its available resources in time and frequency for communicating useful data to its associated mobile terminals. In contrast thereto, a serving base station experiences a load of 0% when no dedicated data is transmitted to any mobile terminal.

According to embodiments, measurements sent to the serving base station in the uplink from associated cell-edge mobile terminals may be evaluated in order to identify interfering neighbor cells served by neighboring serving base stations, i.e. potentially interfering base stations. If certain network configured conditions are fulfilled, as e.g. A2 or A3 events, the mobile terminal may send the corresponding measurement report indicating the triggered event. In some embodiments measurements may be used, in which a mobile terminal measures the RSRP and the RSRQ of its serving cell and a plurality of visible neighbor cells, respectively. For HO measurements, a respective report may be sent to the serving cell in case the measured neighbor cell becomes a certain amount of offset better than the serving cell (e. g. A3 event). Such HO messages, however, have a certain latency. According to other embodiments a measurement report may be transferred to the serving base station as soon as the serving becomes worse than a predefined threshold (e.g. A2 event). However, the latter measurement reports may cause additional traffic in the air interface.

In cells providing a signal above a threshold can be detected, wherein the exact threshold depends on frequency band. However, -125dB can be considered a representative threshold value. A mobile terminal's measurement report may comprise the following information:

- for serving cell and up to 8 neighbors:

   ◦ Reference signal received power (RSRP), exemplary range: -140 44dBm, step 1dB
   ◦ Reference signal received quality (RSRQ), exemplary range -19.5 ... -3dB, step 0.5dB

- for neighbors only:

   ◦ Cell global identifier

- Additional measurement

   ◦ Received Interference Power (RIP), exemplary range: -126 .. -75 dBm, reported in regular intervals of e.g. 100ms.

In the aforementioned embodiments the means 22 for identifying neighboring interfering base stations is adapted, respectively, to receive and process measurements of an associated mobile terminal located in the cell-edge area, the measurements being directed towards signal strength and/or signal quality of base stations being in vicinity of the associated mobile terminal.

Instead of only passively receiving measurement reports from an associated mobile terminal, the means 22 for identifying neighboring interfering base stations may also be adapted to actively instruct an associated mobile terminal located in the border or edge area of the radio cell to perform measurements related to base stations being in vicinity of the associated mobile terminal, i.e. its serving base station and interfering base stations. Whether a mobile terminal is located in the cell-edge area may e.g. be determined based on CQI values reported from the mobile terminals in uplink direction.

For each interfering base station i a serving base station apparatus 20 for serving base station $s$ ($s$ = 1, 2, ...,

$N_s$) may generate a report, respectively, the report holding cumulated hypothetical capacity gains for all mobiles associated to the serving base station $s$ under the condition that the interfering base station i being currently considered is not transmitting, i.e. not interfering. This report may then be conveyed from the serving base station $s$ to the interfering base station i via an inter-base station interface. In LTE, for example, the X2 inter-base station interface or the air interface may be used for that purpose. According to embodiments, the means 23 for estimating the hypothetical capacity gain hence may be adapted to determine the cumulated hypothetical capacity gain $G_{s,i}$ related to a plurality of mobile terminals located in the border area of the served radio cell and being associated to the serving base station $s$ under the assumption that the interfering base station i is not transmitting on certain physical downlink resource blocks. Thereby the cumulated capacity gain $G_{s,i}$ may be determined based on the aforementioned equations (1) to (4), wherein, in some embodiments, the estimate $T_m$ for the total received power may be improved by taking a mobile terminal's RSRP and RSRQ measurements of more than one cell into account. For example, the mobile terminal may measure RSRP and RSRQ of its serving cell and of a plurality of neighboring cells and report those to its serving cell, respectively. There, the means 23 for estimating may be adapted to compute an improved estimate for the total received power $T_m$ based on the RSRP and RSRQ measurements of the more than one radio cell.

The means 24 for transferring may be adapted to transfer information indicative of the estimated hypothetical capacity gain $G_{s,i}$ from said serving base station $s$ to said interfering base station i, e.g. using the X2 inter-base station interface. In addition, also information on the estimated or determined current load situation of the serving base station $s$ may be provided to the interfering base station i via the X2 interface.

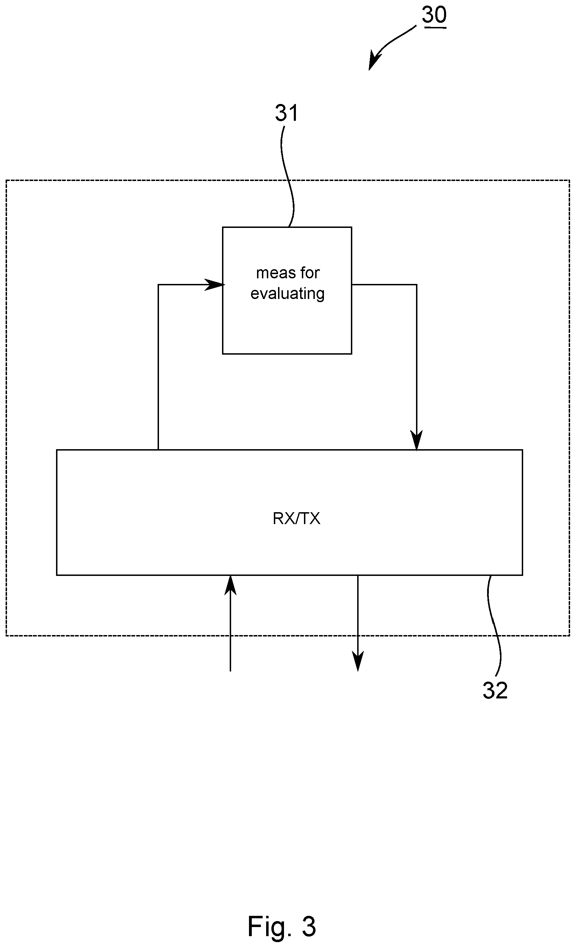

Now turning to Fig. 3, it is show a schematic block diagram of an interfering base station apparatus 30, according to an embodiment.

The interfering base station apparatus 30 comprises means 31 for evaluating, based on a current load situation of the interfering base station i, at least one neighboring serving base station's report transferred to the interfering base station i from at least one neighboring serving base station $s$, the at least one report comprising information indicative of the serving base station's load and an estimated hypothetical capacity gain $G_{s,i}$ for the serving base station $s$ under the assumption that the interfering base station i limits the usage of at least a subset of its interfering physical radio resources. The means 31 for evaluating may interact with means 32 in order to optionally reduce the usage of the interfering base station's interfering physical resources based on an outcome of the evaluation by means 31. Here, the means 31 for evaluating also may comprise analog and/digital signal processor circuitry, while the means 32 for reducing the usage of the interfering base station's physical resources may comprise or may be comprised by an analog and/or digital radio transceiver circuitry, for example. Hence, the interfering base station apparatus 30 is adapted to perform an interfering base station method for ICIC in a cellular communication network, wherein the interfering base station method comprises the steps 15 and 16 of method 10.

Each interfering base station apparatus 30 receives reports from a plurality of serving base station apparatuses 20 corresponding to neighboring serving base stations, respectively. Based on the received reports, the means 31 for evaluating may calculate a hypothetical combined capacity gain related to all serving base stations $s$ ($s$ = 1, 2, ..., $N_s$) based on the assumption that the interfering base station i is not transmitting any data to its mobiles using specific physical radio resources. Based on the received information (load, hypothetical gain $G_{s,i}$), and with the help of a target function, the interfering base station apparatus 30 or its means 32 for reducing may decide on the physical radio resources to be employed to serve mobiles attached to it. Thereby, the decision on the employed physical radio resources may involve a decision on an amount and/or an interference preventing allocation of the physical radio resources. In other words, and according to some embodiments, the means 31 for evaluating may be adapted to determine the hypothetical combined cumulated capacity gain $G_i$ based on equation (5).

After the means 31 has evaluated the plurality of received reports, the interfering base station apparatus 30 may decide, based on the at least one received report on a serving base station's determined cell load and its estimated hypothetical gain $G_{s,i}$, on an amount of physical radio resources which the interfering base station i may use for communicating with its associated mobile terminals. For that purpose load information per serving base station is available at the interfering base station apparatus 30 for guaranteed and best effort traffic separately. According to one embodiment, the interfering base station apparatus 30 may be adapted to serve its own associated mobile terminals with at least a predefined guaranteed rate at highest priority. Further, the interfering base station apparatus 30 may be adapted to enable another (serving) base station to serve its associated mobile terminals at a respective guaranteed rate at second highest priority. Hence, according to an embodiment the interfering base station may decide on the amount of physical radio resources given that communicating with its associated mobile terminals with at least a guaranteed data rate has a highest priority, and given that a communication of a serving base station with its associated mobile terminals with at least a guaranteed data rate has the second highest priority. According to another embodiment, the interfering base station apparatus 30 may also be adapted to drop one of its associated mobile terminals in order to best serve the overall network performance. In this case the communication of a neighboring serving base station with its associated mobile terminals with at least a guaranteed data rate has the highest priority.

The base station apparatuses 20 and 30 may comprise a signal processor, respectively, executing a computer program having a program code for performing or supporting at least one of the above described method-steps, when the computer program is executed on said processor. Hence, embodiments may provide a computer program having a program code for performing one of the above described methods when the computer program is executed on a computer or processor. A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

To summarize, in embodiments a serving base station transceiver suggests to a neighboring interfering base station transceiver to restrict usage of resources. The interfering base station transceiver may either reject the request if it is short of own resources or compares the gain in the origination base station transceiver and agrees on the restriction, if said gain compensates the loss of the interfering base station transceiver's throughput.

Embodiments of the present invention may be used for interference mitigation as well as for Load Balancing (LB). Load balancing supports a cellular radio network to adapt to varying traffic load densities and thereby may increase network throughput. When the load of a particular cell is too high, then load balancing can transfer traffic towards another lower loaded cell and/or support that highly loaded cell e.g. via reducing its received inter-cell interference. In this way, the system may adapt in a flexible way to the current cell load situations, with the result that the users experience a higher quality of service, and that the total system throughput - at a constant quality level - can be increased. This leads to a more relaxed cellular network planning and/or to a delayed need to install additional cells in growing networks which directly results in reduced CapEx costs for the network operator.

In this context of load balancing, the expression "Load" or "Cell Load" describes how "full" a cell is being judged for a particular purpose. Typical measures for cell load are based on the resource usage, such as the Physical Resource Block (PRB) usage in LTE, the user received service quality, such as by which average data rate a particular service can be provided and/or the dropping/blocking probability. Hardware constraints and link capabilities are another dimension which could be considered for the cell load determination. Such physical cell values are then convoluted in order to extract a characterizing load metric which serves as input for LB algorithms. The choice of this load metric as a part of the load balancing algorithm depends on the load balancing strategy.

Load balancing may be restricted on only handover (HO) techniques. However, embodiments of the present ICIC concept additionally may provide a significant benefit. In the sequel, the potential of these two load balancing techniques is evaluated and compared in order to obtain their maximum performance gain values.

LTE deployments use a frequency reuse 1 and in most scenarios the interference limits the cell capacity. Thus, one cell can be supported when its neighboring cells would cause less interference. Consequently, better SINR values are available within this supported cell. Due to this improved signal quality, this cell is now able to transport a larger amount of traffic with the same given amount of resources. The price for this is that neighboring cell(s) restrict or omit the usage of some of their own frequency recourses and thereby do potentially lower their own capacity.

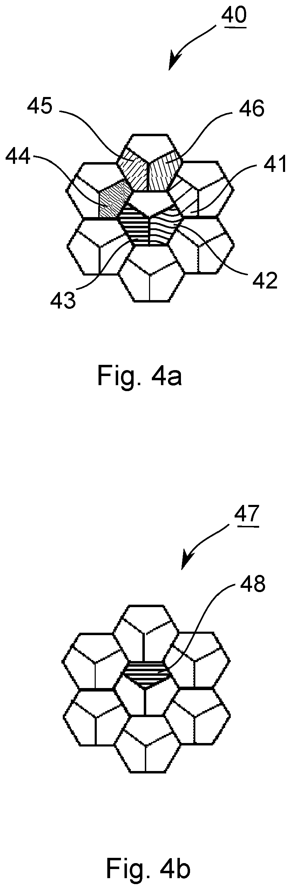

In the subsequent investigation with a highly loaded center cell, an ICIC scheme was chosen for which the maximum ICIC gain is expected. This ICIC scheme is schematically illustrated in Fig. 4a, whereby all cells or sectors without restrictions are indicated by white color. For the other cells or sectors 41 to 46 only specific non-overlapping physical radio resources are chosen, respectively. A frequency selective scheduler is used to take advantage of ICIC.

Intra-system, intra-frequency handover has been investigated as second load balancing mechanism. To reduce the load of a highly loaded center cell, mobiles located at the cell edge are re-assigned to a lower loaded neighbor cell. This is done only if the mobile can be served by the neighbor cell with a sufficient SINR and as long as the neighbor cell has enough resources available. A round robin scheduler was used in all simulations which do not apply ICIC.

The exchange of load information is already standardized in 3GPP and comprises the PRB usage for Guaranteed Bit Rate (GBR), non-GBR and total GBR usage for the uplink and downlink direction, respectively. Additionally, hardware load and transport network layer load indicators are specified. These load indicators are required as input parameters for self-x algorithm (e.g. self-planning, self-configuration, self-optimization, self-healing, self-maintenance, etc.) for both load balancing mechanisms.

In case a load balancing algorithm is used, it will typically be implemented per base station transceiver. It processes information available there and will negotiate control information via the X2 interface with peer entities in neighboring base station transceivers. Relevant neighbors are identified via the neighbor relation table. The input data can be separated to data available at the individual transceiver like e.g. PRB usage, handover measurements and to common knowledge shared between base station transceivers as e.g. load or color information.

In case of load balancing by handovers, the input data is typically limited to load information from neighbors and to data available in the hosting base station transceiver. In response, this algorithm negotiates the mobility parameter settings with its peers. Embodiments of the ICIC concept try to restrain the usage of PRB which cause a high interference to mobiles associated to neighbor cells. Yet this information is not a priori available at the base station transceiver. Therefore often simpler approaches based on static or semi-static cell coloring are used to identify the PRB dedicated to load balancing. Regarding load balancing by ICIC, a signaling between base stations may be required for exchanging coloring information and for initiating a re-coloring to adapt the ICIC scheme to the actual load situation.

The 3GPP standardized signaling for the negotiation of mobility parameter settings is mandatory in 3GPP. Because it is foreseen for both, handover optimization and load balancing and because the information required for load balancing by ICIC is not directly accessible, the implementation of load balancing by ICIC is considered to be more complex.

Simulations were carried out on a playground 47 with 21 tri-sectored cells as illustrated in Fig. 4b. The offered traffic can be configured separately for the center cell 48 and for the other cells.

Within each cell, the offered traffic can be placed in such a way that that a certain percentage of the users are located within the cell edge area. In the following, the investigated cell edge traffic percentages are 15% (nearly uniform traffic distribution within the cell), 30% and 50%.

The system performance was measured in terms of the total throughput within an evaluation area consisting of the center cell 48 and its six directly neighboring cells. For the simulation series the center cell load and the other cell load was varied (center cell [Mbps]: 3, 5, 7, 9, 11, 13, 15, 17, 19, 21, 23, 25. Other cells [Mbps]: 3, 5, 7, 9, 11, 13, 20).

The simulation studies compare the system performance of different load balancing strategies, of ICIC ("icic"), of HO ("ho"), the combination of these two ("both"). As a reference scenario no load balancing ("none") was used.

As performance metric the maximum supported traffic in the respective scenario was used. This was measured by comparing the load offered in the evaluation area against the load carried in that area. When the offered traffic is increased in the center cell, at a certain point the cell saturates and cannot carry more traffic. The performance figure is defined as that point where the carried load drops below 97% of the offered load. The load balancing gain is then calculated as the ratio between the investigated scenario and the reference scenario "none".

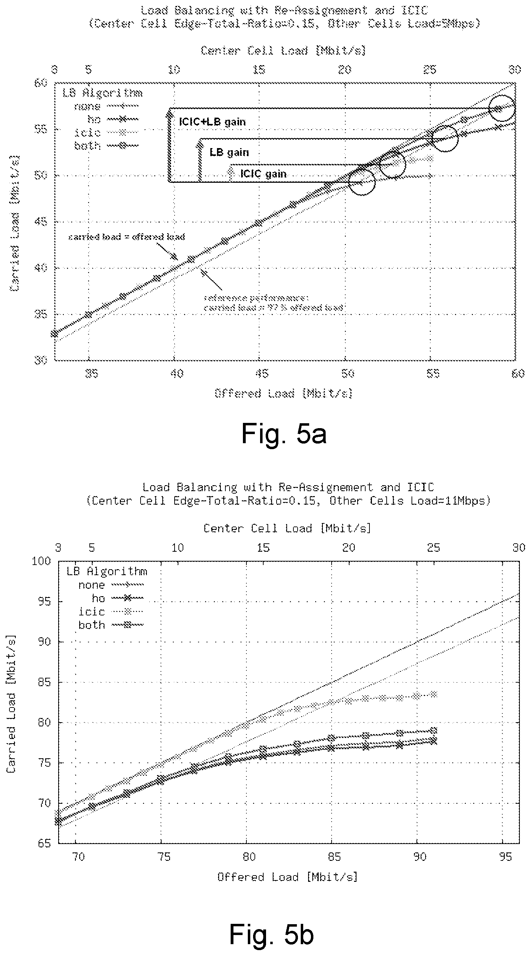

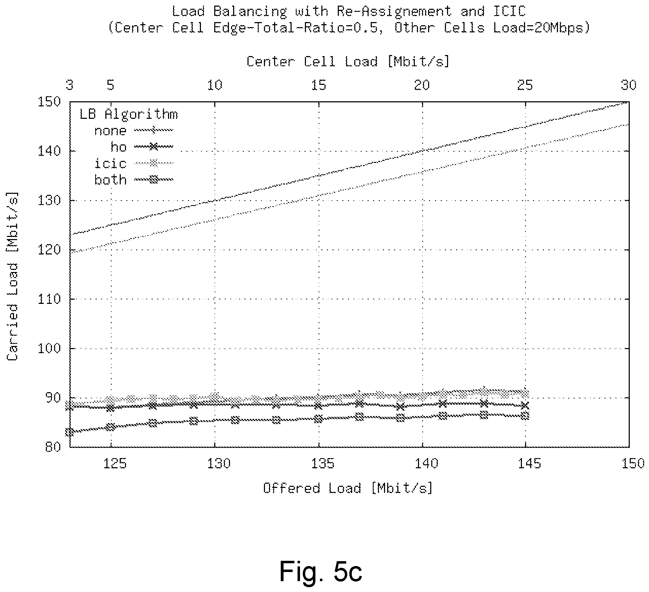

Figs. 5a to 5c depict the system performance for different load balancing scenarios at different load levels. These graphs show on the Y-axis the total carried traffic within the evaluation area. This evaluation area consists of the center cell 48 and its ring of six directly neighboring cells. While the input traffic load of the other cells is kept at constant levels of 5 MBit/s in Fig. 5a, 11 MB/s in Fig. 5b and 20 MB/s in Fig. 5c, the offered traffic load of the single center cell 48 is varied as shown on the top X-axis of the graphs. The bottom X-axis denotes the total offered traffic load within this evaluation area. The curves compare the potential performance of different load balancing techniques, of handovers alone ("ho"), of ICIC alone ("icic"), these two techniques HO and ICIC simultaneously ("both") and of the reference scenario without handover parameter adaptation and without any ICIC ("none").

Fig. 5a shows how the carried traffic saturates as the offered traffic increases. As can be seen for the situation of medium load, all load balancing techniques lead to a performance gain by shifting the point where the carried traffic drops down to 97% of the offered traffic. Here, the capabilities of load balancing via handover parameter variation performance are larger than the one of ICIC.

Handover parameter variation is a very powerful load balancing technique in this medium load range. Neighboring cells are not fully loaded, so the highly loaded center cell is able to transfer some of its mobiles to neighboring cells which still have free capacity to take over some additional users. The neighboring cells suffer by having to spend a lot of resources to serve distant mobiles, but as these neighboring cells have sufficient unused resources, this additional resource consumption does not harm the throughput and Quality of Service (QoS) performance of those cells; the total system throughput can considerably be increased.

On the other hand for the ICIC case, there is not a large amount of interference generated by the low or medium loaded neighboring cells. When in addition ICIC is applied, there is then only little performance potential left to further improve the system performance in such low and medium load situations.

As these two load balancing mechanisms operate with different techniques, the performance gains are complementary and are nearly additive in such medium load situations.

In contrast, at highly loaded neighboring cells, the different load balancing mechanisms show a different potential for how well the center cell can be supported by its neighboring cells.

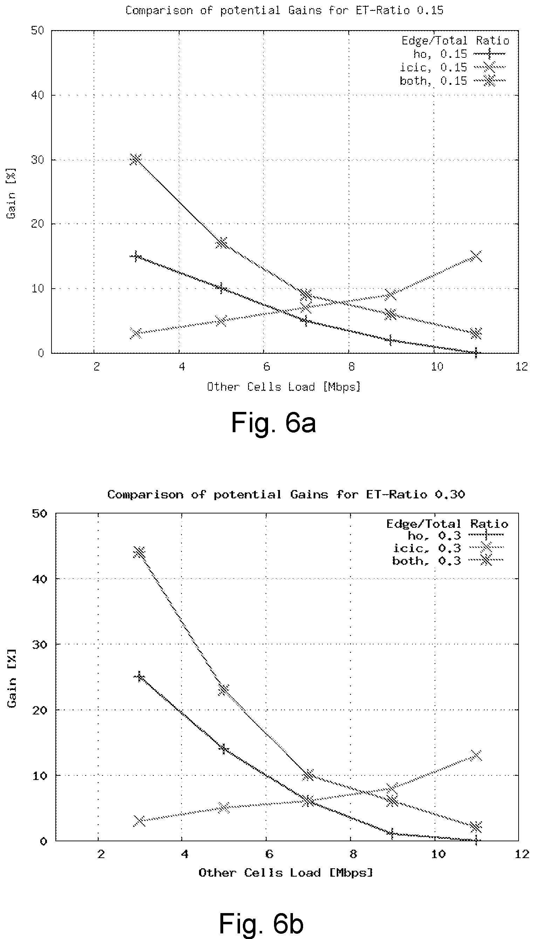

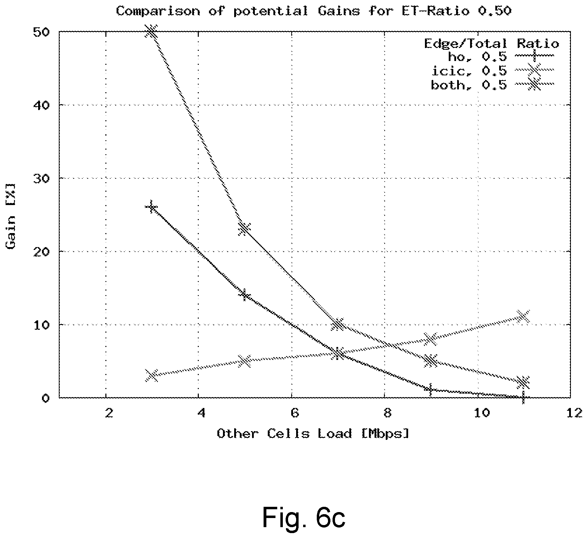

In such high load situations, there is a lot of interference and thus ICIC has a large capability to optimize the interference situation. In this cell-frequency-reuse 1 LTE scenario embodiments of the ICIC concept may provide an appreciable maximal reachable performance gain of up to 16% as is visualized in Fig. 6a. The maximal reachable ICIC potential is reached at such high load levels. When the traffic load gets even higher or overloaded, then the ICIC potential for load balancing is decreasing. This is because no free resources are available anywhere which could be coordinated for the purpose of interference mitigation or which may be arranged intelligently for load balancing.

Furthermore, the link adaptation modeling characteristic leads to a further small performance degradation. This, however, is a simulation artifact due to underestimated link capacities.

When both techniques, ICIC and handovers are used as combined load balancing technique within the high load range, the performance gain is suffering from the handover performance problems. For this reason, the performance of both techniques together is lower than only ICIC alone. Thus these simulation results suggest that in such high load situations only ICIC shall be used and no load balancing via handovers.

Fig. 5c shows the situation for a scenario where the other cells are overloaded and load balancing techniques can no longer be beneficial for the system performance. Load balancing by handover fails because target cells are out of resources and cannot take over more traffic. ICIC fails because every cell does fully use all its resources.

Fig. 6a to 6c show the extracted relative performance gains for different percentages of mobiles located at the cell edge in relation to the total number of mobiles within the cell. Handover parameter variation can lead to an extremely high performance gain of up to more than 27%. The reachable gain via handovers is the larger the more users are close to the cell border and the lower the traffic load is in neighboring cells. Generally speaking, there is a handover benefit, as long as neighboring cells do still have enough free resources to take over additional users without having to decrease the guaranteed service of their own already present users. When at high load situations no free resources are left, then there is no longer a load balancing benefit with this handover algorithm. Other handover algorithms may show different high load behavior, i.e. those type of handover algorithms where a full target cell is still allowed to accept additional users for the price of a reduced service quality for the target cell users.

Inter-cell interference coordination shows contrary and complementing gain behavior. With increasing traffic load the reachable performance gains increase up to reasonably high traffic load level. In the scenarios with 15%, 30% and 50% cell edge users, maximum ICIC gains of 16%, 13% and 11% were obtained. It needs to be noted, that those gains are the upper bound for an ideal ICIC scenario. At even higher load levels, the ICIC gain then gets smaller again until there is no ICIC gain anymore in situations where all cells are overloaded. When there is a low or medium traffic load, then there is not too much interference anyway, and thus ICIC does not have too much potential to lead a benefit. On the other hand at very high load levels, there are little or no resources left, which could be arranged intelligently by ICIC so that there is then no additional ICIC benefit possible. Thus, the ICIC load balancing benefit is focused on a certain load range around reasonably high traffic load, where it has the potential to reach appreciable benefits in particular scenarios.

Both techniques, ICIC and handovers, are complementary, and can beneficially be combined at certain load levels. A usage of both techniques simultaneously leads to a considerable advantage from low up to medium-high other load levels, here up to about 8 Mbps other cell loads, above which the handover penalty would outweigh the handover benefits. At high other cell load levels, ICIC alone does then show the highest potential. The observed extreme gain values, which reached by combining both techniques, exceed 50% at very low other cells load levels for very particular scenarios.

Summarized, the following statements can be given for the two investigated load balancing mechanisms:

HO-parameter variation:

- High potential for handovers at low and medium load levels within the neighboring cells with up to more than 27% performance gain in certain situations.

- There is a considerable handover benefit as long as the neighboring cells do have free resources to take over additional users.

- No handover potential when all neighboring cells have very high load or are overloaded

ICIC:

- Low potential at low and medium load levels within the neighboring cells.

- Good potential for ICIC when neighboring cells are in high load situation, up to a maximum 16% gain in certain scenarios.

- No ICIC benefit anymore in highly overloaded situations

Both techniques are complementary. Depending on the cell load situation and depending on the cell load difference between the involved neighboring cells, one of the techniques alone or both techniques in combination show the largest overall potential.

The scenario for this study has especially been designed to obtain the maximum reachable benefit, i.e. the center cell is maximally supported by its neighboring cells. The performance values could be considered as upper bound of the maximum reachable load balancing benefit. However, the selected scenario reflects the overload situation in limited geographic areas for which load balancing is designed.

The load balancing mechanisms investigated here act in principle on cell-edge users and therefore require a higher cell edge user density. The simulation results reflect this in terms of a pronounced impact of the user density at the cell edge on load balancing gain. However, the impact has turned out to be less than expected. This means that load balancing is beneficial not only in very extreme and rare load distributions with high user densities at cell edge. There is also an advantage for a uniform user and load distributions within the cell, of course with a somewhat smaller maximum gain.

In summary, due to the complementing nature of both load balancing mechanisms investigated, the realization of a significant gain from load balancing is expected to be achievable in most cases. Only for the case of a high load density at cell center without users being located at the cell edge load balancing in principle cannot improve the system performance.

To summarize, embodiments may allow mobile network operators to further optimize a performance of their existing and future wireless communication networks with respect to inter-cell interference, load balancing in highly loaded radio access networks, and, hence, throughput. In this way, the communication system may adapt in a flexible way to the current cell load situations, with the result that the users may experience a higher quality of service, and that the total system throughput - at a constant quality level - can be increased. This may lead to a more relaxed cellular network planning and/or to a delayed need to install additional cells in growing networks which directly results in reduced capital expenditures for the network operator.

The description and drawings merely illustrate the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

Functions of various elements shown in the figures, including any functional blocks may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

**1.** A serving base station method (10) for inter-cell interference coordination in a cellular communication network comprising a plurality of radio cells, each radio cell being served by a serving base station, the serving base station method comprising:

determining (11) a current load situation of the serving base station; identifying (12) interfering base stations interfering a communication of the serving base station with its associated mobile terminals located in a border area of the serving base station's served radio cell;
estimating (13) a hypothetical capacity gain for the serving base station under the premise that an identified interfering base station restrains a usage of at least a subset of its interfering physical radio resources; and
transferring (14) a report on the serving base station's current load situation and the estimated hypothetical capacity gain to each of the identified interfering base stations.

**2.** The method (10) according to claim 1, further comprising:

evaluating (15), at an identified interfering base station, at least one report transferred from at least one neighboring serving base station, in order to reduce (16), where appropriate, a usage of said identified interfering base station's physical radio resources based on the evaluation and a current load situation of the identified interfering base station.

3. The method (10) according to claim 1, wherein determining (11) the serving base station's current load situation comprises determining physical radio resource blocks used for the communication of the serving base station with its associated mobile terminals.

4. The method (10) according to claim 1, wherein identifying (12) the interfering base stations comprises instructing an associated mobile terminal located in the border area of the radio cell to perform measurements related to base stations being in vicinity of the associated mobile terminal.

5. The method (10) according to claim 1, wherein identifying (12) the interfering base stations comprises measurements of an associated mobile terminal located in the border area of the radio cell, the measurements being directed towards signal strength and/or signal quality of base stations being in vicinity of the associated mobile terminal.

6. The method (10) according to claim 1, wherein estimating (13) the hypothetical capacity gain comprises determining a cumulated capacity gain $G_{s,i}$ related to a plurality of mobile terminals located in the border area of the radio cell and being associated to the serving base station $s$ under the assumption that an interfering base station $i$ is not transmitting on certain physical radio blocks.

7. The method (10) according to claim 6, wherein the cumulated capacity gain $G_{s,i}$ is determined based on

$$G_{s,i} = \sum_m G_{m,s,i} \,,$$

wherein

$$G_{m,s,i} = f_C(Q_{m,s,i}) - f_C(Q) \,,$$

wherein $f_C(Q_{m,s,i})$ denotes an estimate of a channel capacity $C_{m,s,i}$ based on a channel quality

$$Q_{m,s,i} = \frac{S}{T - S - I}$$

of an associated mobile terminal $m$ served by serving base station $s$ under the assumption that the interfering base station $i$ is not transmitting, and wherein $f_C(Q)$ denotes an estimate of a channel capacity $C$ based on a measured channel quality $Q$ of the associated mobile terminal $m$ served by serving base station $s$ with experienced interference, wherein $Q$ corresponds to a Reference Signal Received Quality (RSRQ) of the serving base station $s$, wherein S corresponds to a Reference Signal Received Power (RSRP) of the serving base station $s$, wherein $I$ corresponds to an Reference Signal Received Power (RSRP) of the interfering base station $i$, and wherein T corresponds to a total received power, which may be determined based on

$$T = \frac{S(1+Q)}{Q} \,.$$

8. The method (10) according to claim 6, wherein transferring (14) the report comprises transferring the cumulated capacity gain $G_{s,i}$ of serving base station $s$ under the assumption that interfering base station i is not transmitting from said serving base station $s$ to said interfering base station i.

9. The method (10) according to claim 2, wherein evaluating (15) at least one transferred report comprises, at an interfering base station i, determining a hypothetical combined cumulated capacity gain

$$G_i = \sum_s G_{s,i}$$

of a plurality of reporting serving base stations *s* under the assumption that said interfering base station i is not transmitting any data on physical radio resources to its associated mobile terminals.

10. The method (10) according to claim 2, wherein, after evaluating (15), the interfering base station *i* decides on an amount of physical radio resources used for communicating with its associated mobile terminals based on the at least one received report on a serving base station's determined cell load and its estimated hypothetical gain.

11. The method (10) according to claim 10, wherein the interfering base station decides on the amount of physical radio resources given that communicating with its associated mobile terminals with at least a guaranteed data rate has a highest priority, and given that a communication of a serving base station with its associated mobile terminals with at least a guaranteed data rate has the second highest priority.

12. A serving base station apparatus (20) being adapted to perform the method according to claim 1.

13. A interfering base station method for inter-cell interference coordination in a cellular communication network, the interfering base station method comprising:

evaluating (15), based on a current load situation of the interfering base station, at least one report transferred to the interfering base station from at least one neighboring serving base station, the at least one report comprising a cell load and an estimated hypothetical capacity gain for the serving base station under the premise that the interfering base station restrains a usage of at least a subset of its interfering physical radio resources, in order to optionally reduce (16) the usage of the interfering base station's physical radio resources based on the evaluation.

14. An interfering base station apparatus (30) being adapted to perform the method according to claim 13.

15. A computer program having a program code for performing the steps of one of the method according to claims 1 or 13, when the computer program is executed on a computer or processor.

**Patentansprüche**

1. Verfahren für eine bedienende Basisstation (10) für Zwischenzell-Interferenzkoordination in einem Mobilfunk-Kommunikationsnetzwerk, umfassend eine Vielzahl von Funkzellen, wobei jede Funkzelle durch eine bedienende Basisstation bedient wird, wobei das Verfahren der bedienenden Basisstation umfasst:

Bestimmen (11) einer momentanen Lastsituation der bedienenden Basisstation;
Identifizieren (12) von störenden Basisstationen, welche die Kommunikation der bedienenden Basisstation mit ihren zugehörigen mobilen Endgeräten, befindlich in einem Grenzbereich der von der bedienenden Basisstation bedienten Funkzelle, stört;
Schätzen (13) einer hypothetischen Kapazitätsverstärkung für die bedienende Basisstation unter der Voraussetzung, dass eine identifizierte störende Basisstation eine Verwendung von mindestens einem Untersatz ihrer störenden physischen Funkressourcen zurückhält; und
Übertragen (14) eines Berichts über die momentane Lastsituation der bedienenden Basisstation und die geschätzte hypothetische Kapazitätsverstärkung für jede der identifizierten störenden Basisstationen.

2. Verfahren (10) nach Anspruch 1, weiterhin umfassend:

Auswerten (15) an einer identifizierten störenden Basisstation von mindestens einem Bericht, der von mindestens einer benachbarten bedienenden Basisstation übertragen wurde, um gegebenenfalls die Verwendung der physischen Funkressourcen besagter identifizierter störenden Basisstation beruhend auf der Auswertung und einer momentanen Lastsituation der identifizierten störenden Basisstation zu verringern (16).

3. Verfahren (10) nach Anspruch 1, wobei das Bestimmen (11) der momentanen Lastsituation der bedienenden Basisstation das Bestimmen der physischen Funkressourcen-Blöcke umfasst, welche für die Kommunikation der bedienenden Basisstation mit ihren zugehörigen mobilen Endgeräten verwendet werden.

4. Verfahren (10) nach Anspruch 1, wobei das Identifizieren (12) der störenden Basisstationen das Anweisen eines zugehörigen mobilen Endgeräts, befindlich im Grenzbereich der Funkzelle, zum Durchführen von Messungen bezogen auf die Basisstation in der Nähe des zugehörigen mobilen Endgeräts umfasst.

5. Verfahren (10) nach Anspruch 1, wobei das Identifizieren (12) der störenden Basisstationen Messungen eines zugehörigen mobilen Endgeräts, befindlich im Grenzbereich der Funkzelle, umfasst, wobei die Messungen auf Signalstärke und/oder Signalqualität der Basisstationen in der Nähe des zugehörigen mobilen Endgeräts gerichtet sind.

6. Verfahren (10) nach Anspruch 1, wobei das Schätzen (13) der hypothetischen Kapazitätsverstärkung das Bestimmen einer kumulierten Kapazitätsverstärkung $G_{s,i}$ bezogen auf eine Vielzahl von mobilen Endgeräten, befindlich im Grenzbereich der Funkzelle und zugehörig zur bedienenden Basisstation s, umfasst, unter der Voraussetzung, dass eine störende Basisstation $i$ nicht auf bestimmten physischen Funkblöcken überträgt.

7. Verfahren (10) nach Anspruch 6, wobei die kumulierte Kapazitätsverstärkung $G_{s,i}$ bestimmt wird auf der Basis

$$G_{s,i} = \sum_m G_{m,s,i},$$

wobei

$$G_{m,s,i} = f_C(Q_{m,s,i}) - f_C(Q),$$

wobei $f_C(Q_{m,s,i})$ eine Schätzung einer Kanalkapazität $C_{m,s,i}$ bezeichnet, auf der Basis einer Kanalqualität

$$Q_{m,s,i} = \frac{S}{T - S - I}$$

eines zugehörigen mobilen Endgeräts $m$, das von der bedienenden Basisstation $s$ unter der Voraussetzung bedient wird, dass die störende Basisstation i nicht überträgt, und wobei $f_C(Q)$ eine Schätzung einer Kanalkapazität $C$ auf der Basis einer gemessenen Kanalqualität $Q$ des zugehörigen mobilen Endgeräts $m$, das von der bedienenden Basisstation $s$ mit wahrgenommener Störung bedient wird, bezeichnet, wobei $Q$ einer Referenzsignal-Empfangsqualität (RSRQ) der bedienenden Basisstation $s$ entspricht, wobei $S$ einer Referenzsignal-Empfangsstärke (RSRP) der bedienenden Basisstation $s$ entspricht, wobei $I$ einer Referenzsignal-Empfangsstärke (RSRP) der störenden Basisstation $i$ entspricht und wobei $T$ einer gesamten empfangenen Stärke entspricht, welche bestimmt werden kann auf der Basis von

$$T = \frac{S(1 + Q)}{Q},$$

8. Verfahren (10) nach Anspruch 6, wobei das Übertragen (14) des Berichts das Übertragen der kumulierten Kapazitätsverstärkung $G_{s,i}$ der Basisstation s umfasst, unter der Voraussetzung, dass die störende Basisstation $i$ nicht von besagter bedienender Basisstation $s$ zu besagter störender Basisstation $i$ überträgt.

9. Verfahren (10) nach Anspruch 2, wobei das Auswerten (15) von mindestens einem übertragenen Bericht das Bestimmen an einer störenden Basisstation i umfasst, und zwar von einer hypothetischen kombinierten kumulierten Kapazitätsverstärkung

$$G_i = \sum_s G_{s,i}$$

einer Vielzahl von berichtenden bedienenden Basisstation $s$, unter der Voraussetzung, dass besagte störende Basisstation $i$ keine Daten auf physischen Funkressourcen zu ihren zugehörigen mobilen Endgeräten überträgt.

10. Verfahren (10) nach Anspruch 2, wobei nach dem Auswerten (15) die störende Basisstation $i$ über die Höhe von physischen Funkressourcen entscheidet, der für das Kommunizieren mit ihren zugehörigen mobilen Endgeräten verwendet wird, und zwar auf der Basis von mindestens einem empfangenen Bericht über die bestimmte Zell-Last der bedienenden Basisstation und deren geschätzte hypothetische Verstärkung.

11. Verfahren (10) nach Anspruch 10, wobei die störende Basisstation über die Höhe der physischen Funkressourcen entscheidet, vorausgesetzt, das Kommunizieren mit ihren zugehörigen mobilen Endgeräten mit mindestens einer garantierten Datenrate besitzt die höchste Priorität und vorausgesetzt, die Kommunikation einer bedienenden Basisstation mit ihren zugehörigen mobilen Endgeräten mit mindestens einer garantierten Datenrate besitzt die zweithöchste Priorität.

12. Vorrichtung einer bedienenden Basisstation (20), die angepasst ist für das Durchführen des Verfahrens nach Anspruch 1.

13. Verfahren für eine störendende Basisstation für Zwischenzell-Interferenzkoordination in einem Mobilfunk-Kommunikationsnetzwerk, wobei das Verfahren der bedienenden Basisstation umfasst:

Auswerten (15), beruhend auf einer momentanen Lastsituation, von mindestens einem Bericht, der von mindestens einer benachbarten bedienenden Basisstation an die störende Basisstation übertragen wurde, wobei der mindestens eine Bericht eine Zell-Last und eine geschätzte hypothetisch Kapazitätsverstärkung für die bedienende Basisstation umfasst, unter der Voraussetzung, dass die störende Basisstation die Verwendung von mindestens einem Untersatz ihrer störenden physischen Funkressourcen zurückhält, um die Verwendung der physischen Funkressourcen der störenden Basisstation auf der Basis der Auswertung optional zu verringern (16).

14. Vorrichtung einer störenden Basisstation (30), die angepasst ist für das Durchführen des Verfahrens nach Anspruch 13.

15. Computerprogramm mit einem Programmcode zum Durchführen der Schritte eines des Verfahrens nach den Ansprüchen 1 oder 13, wenn das Computerprogramm auf einem Computer oder einem Prozessor ausgeführt wird.

**Revendications**

1. Procédé de station de base de desserte (10) pour une coordination d'interférence intercellulaire dans un réseau de communication cellulaire comprenant une pluralité de cellules radio, chaque cellule radio étant desservie par une station de base de desserte, le procédé de station de base de desserte comprenant les étapes suivantes :

déterminer (11) une situation de charge actuelle de la station de base de desserte ;
identifier (12) des stations de base interférentes qui interfèrent avec une communication entre la station de base de desserte et ses terminaux mobiles associés situés dans une zone frontière de la cellule radio desservie de la station de base de desserte ;
estimer (13) un gain de capacité hypothétique pour la station de base de desserte à condition qu'une station de base interférente identifiée limite une utilisation d'au moins un sous-ensemble de ses ressources radio physiques interférentes ; et
transférer (14) un rapport sur la situation de charge actuelle et le gain de capacité hypothétique estimé de la station de base de desserte vers chacune des stations de base interférentes identifiées.

2. Procédé (10) selon la revendication 1, comprenant en outre l'étape suivante :

évaluer (15), au niveau d'une station de base interférente identifiée, au moins un rapport transféré à partir d'au moins une station de base de desserte voisine, afin de diminuer (16), le cas échéant, une utilisation des ressources radio physiques de ladite station de base interférente identifiée sur la base de l'évaluation et d'une situation de charge actuelle de la station de base interférente identifiée.

3. Procédé (10) selon la revendication 1, dans lequel la détermination (11) de la situation de charge actuelle de la station de base de desserte comprend la détermination de blocs de ressources radio physiques utilisés pour la communication de la station de base de desserte avec ses terminaux mobiles associés.

4. Procédé (10) selon la revendication 1, dans lequel l'identification (12) des stations de base interférentes comprend à donner l'instruction à un terminal mobile associé situé dans la zone frontière de la cellule radio d'effectuer des mesures relatives aux stations de base à proximité du terminal mobile associé.

5. Procédé (10) selon la revendication 1, dans lequel l'identification (12) des stations de base interférentes comprend des mesures d'un terminal mobile associé situé dans la zone frontière de la cellule radio, les mesures concernant l'intensité de signal et/ou la qualité de signal des stations de base à proximité du terminal mobile associé.

6. Procédé (10) selon la revendication 1, dans lequel l'estimation (13) du gain de capacité hypothétique comprend la détermination d'un gain de capacité cumulé $G_{s,i}$ relatif à une pluralité de terminaux mobiles situés dans la zone frontière de la cellule radio et étant associés à la station de base de desserte $s$ en supposant qu'une station de base interférente i ne transmette pas sur certains blocs radio physiques.

7. Procédé (10) selon la revendication 6, dans lequel le gain de capacité cumulé $G_{s,i}$ est déterminé sur la base de la formule

$$G_{s,i} = \sum_m G_{m,s,i},$$

dans laquelle

$$G_{m,s,i} = f_C(Q_{m,s,i}) - f_C(Q),$$

dans laquelle $f_C(Q_{m,s,i})$ indique une estimation d'une capacité de canal $C_{m,s,i}$ sur la base d'une qualité de canal

$$Q_{m,s,i} = \frac{S}{T - S - I}$$

d'un terminal mobile associé m desservi par une station de base de desserte $s$ en supposant que la station de base interférente i ne transmette pas, et dans lequel $f_C(Q)$ indique une estimation d'une capacité de canal $C$ sur la base d'une qualité de canal mesurée $Q$ du terminal mobile associé $m$ desservi par la station de base de desserte $s$ subissant une interférence, dans lequel $Q$ correspond à une qualité reçue de signal de référence (RSRQ) de la station de base de desserte $s$, dans lequel $S$ correspond à une puissance reçue de signal de référence (RSRP) de la station de base de desserte $s$, dans lequel $I$ correspond à une puissance reçue de signal de référence (RSRP) de la station de base interférente $i$, et dans lequel $T$ correspond à une puissance reçue totale, qui peut être déterminée sur la base de

$$T = \frac{S(1 + Q)}{Q},$$

8. Procédé (10) selon la revendication 6, dans lequel le transfert (14) du rapport comprend le transfert du gain de capacité cumulé $G_{s,i}$ de la station de base de desserte $s$ en supposant que la station de base interférente $i$ ne transmette pas à partir de ladite station de base de desserte $s$ vers ladite station de base interférente $i$.

**9.** Procédé (10) selon la revendication 2, dans lequel l'évaluation (15) d'au moins un rapport transféré comprend, au niveau d'une station de base interférente *i*, la détermination d'un gain de capacité cumulé combiné hypothétique

$$G_i = \sum_s G_{s,i}$$

d'une pluralité de stations de base de desserte *s* établissant un rapport en supposant que ladite station de base interférente i ne transmette aucune donnée sur des ressources radio physiques à ses terminaux mobiles associés.

**10.** Procédé (10) selon la revendication 2, dans lequel, après l'évaluation (15), la station de base interférente i choisit une quantité de ressources radio physiques utilisée pour communiquer avec ses terminaux mobiles associés sur la base de l'au moins un rapport reçu sur une charge de cellule déterminée d'une station de base de desserte et sur son gain hypothétique estimé.

**11.** Procédé (10) selon la revendication 10, dans lequel la station de base interférente choisit la quantité de ressources radio physiques étant donné que la communication avec ses terminaux mobiles associés avec au moins un débit de données garanti a une priorité la plus élevée, et étant donné qu'une communication d'une station de base de desserte avec ses terminaux mobiles associés avec au moins un débit de données garanti a la deuxième priorité la plus élevée.

**12.** Appareil de station de base de desserte (20) adapté pour exécuter le procédé selon la revendication 1.

**13.** Procédé de station de base interférente pour la coordination d'interférence intercellulaire dans un réseau de communication cellulaire, le procédé de station de base interférente comprenant l'étape suivante :

évaluer (15), sur la base d'une situation de charge actuelle de la station de base interférente, au moins un rapport transféré à la station de base interférente à partir d'au moins une station de base de desserte voisine, l'au moins un rapport comprenant une charge de cellule et un gain de capacité hypothétique estimé pour la station de base de desserte à condition que la station de base interférente limite une utilisation d'au moins un sous-ensemble de ses ressources radio physiques interférentes, afin de diminuer (16) de manière facultative l'utilisation des ressources radio physiques de la station de base interférente sur la base de l'évaluation.

**14.** Appareil de station de base interférente (30) étant adapté pour exécuter le procédé selon la revendication 13.

**15.** Programme informatique possédant un code de programme pour exécuter les étapes d'un procédé selon la revendication 1 ou 13, lorsque le programme informatique est exécuté sur un ordinateur ou un processeur.

**10**

determining a current load situation of a serving base station — 11

identifying interfering base stations — 12

estimating a hypothetical capacity gain for the serving base station — 13

transferring a report on serving BS current load situation & estimated hypothetical capacity gain to interfering BS — 14

evaluating the report at interfering BS — 15

reducing usage of interfering BS's physical radio resources — 16

Fig. 1

20

21                          22                          23

| meas for determining load | meas for identifying interfering BS's | meas for estimating hypothetical gain |

RX/TX

24

Fig. 2

Fig. 3

Fig. 4a

Fig. 4b

Load Balancing with Re-Assignment and ICIC
(Center Cell Edge-Total-Ratio=0.15, Other Cells Load=5Mbps)

Center Cell Load [Mbit/s]

## Fig. 5a

Load Balancing with Re-Assignement and ICIC
(Center Cell Edge-Total-Ratio=0.15, Other Cells Load=11Mbps)

Center Cell Load [Mbit/s]

## Fig. 5b

Fig. 5c

Comparison of potential Gains for ET-Ratio 0.15

## Fig. 6a

Comparison of potential Gains for ET-Ratio 0.30

## Fig. 6b

Fig. 6c

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2008033967 A1

- US 20100267408 A1

### Non-patent literature cited in the description

- Support for Semi-Static Inter cell Interference Coordination. **ALCATEL-LUCENT et al.** 3GPP DRAFT; R1-08-1874 SEMI STATIC INTER COORD OR FREUSE 2, 3RD GENERATION PARTNERSHIP PROJECT (3GPP). MOBILE COMPETENCE CENTRE, 14 May 2008, vol. RAN WG1

- Update of Inter-cell Interference Coordination Feature Description. **NOKIA SIEMENS NETWORKS et al.** 3GPP DRAFT; R2-111639, 3RD GENERATION PARTNERSHIP PROJECT (3GPP). MOBILE COMPETENCE CENTRE, 25 February 2011, vol. RAN WG2
- Uplink inter-cell interference coordination. 3GPP DRAFT; R1-080360, 3RD GENERATION PARTNERSHIPPROJECT (3GPP). MOBILE COMPETENCE CENTRE, 09 January 2008, vol. RAN WG1